# EUROPÄISCHE PATENTSCHRIFT

(11) **EP 1 359 336 B1**
(45) Veröffentlichungstag und Bekanntmachung des Hinweises auf die Patenterteilung: **18.03.2009**
(21) Anmeldenummer: 03007298.7
(22) Anmeldetag: 01.04.2003
(51) Int. Cl.: F16D 48/06, B60W 30/18

(54) **Kraftfahrzeug mit Kriechfunktion**
Vehicle with creep control function
Véhicule avec procédé de régulation à faibles vitesses

(30) Priorität: 02.05.2002 DE 10219420
(43) Veröffentlichungstag der Anmeldung: 05.11.2003
(73) Patentinhaber: ZF Sachs AG, 97424 Schweinfurt (DE)
(72) Erfinder: Kuhstrebe, Jochen, Dipl.-Phys., 97318 Westheim (DE); John, Thomas, Dipl.-Ing., 97529 Alitzheim (DE); Strasser, Thomas, Dipl.-Ing., 97422 Schweinfurt (DE)

(56) Entgegenhaltungen:
- EP-A- 0 375 162
- EP-A- 0 393 910
- EP-A- 0 731 294
- EP-A- 1 090 798
- EP-A- 1 101 969
- WO-A-02/099302
- WO-A-02/101257
- DE-A- 4 426 260
- DE-A- 10 038 379
- DE-A- 19 530 613
- DE-A- 19 639 322
- DE-A- 19 807 764
- DE-A- 19 823 284
- DE-A- 19 841 917
- US-A- 5 378 211

## Beschreibung

Die Erfindung betrifft ein Kraftfahrzeug mit einem eine Antriebseinheit, ein Getriebe und eine Momentenübertragungseinrichtung zwischen der Antriebseinheit und dem Getriebe aufweisenden Antriebsstrang, mit den Merkmalen des Oberbegriffs von Anspruch 1, wie es allgemein bekannt ist.

Systembedingtes Kriechen ist aus Automatikfahrzeugen mit Drehmomentwandlern bekannt und kann bei diesen herkömmlich auch nicht abgeschaltet werden. Im Falle von Kraftfahrzeugen ohne Automatikgetriebe, beispielsweise Fahrzeugen mit einem automatisierten Schaltgetriebe, kann ein derartiges Kriechen durch entsprechende Funktionalitäten nachgebildet werden.

Im Stand der Technik werden verschiedene Weisen der Aktivierung und Deaktivierung einer entsprechenden Kriechfunktionalität vorgeschlagen. So schlägt die DE 100 16 582 A1 ein separates Betätigungselement vor, unter dessen Vermittlung das Kriechen aktiviert werden kann. Aus der DE 196 39 322 A1 ist es bekannt, in einem Kraftfahrzeug eine automatisch gesteuerte Kupplung vorzusehen, die auf Grundlage zumindest einer fahrerseitigen Betätigung einer Fahrzeugbremse, einer fahrerseitigen Betätigung eines Steuerorgans des Motors sowie auf Grundlage eines Einschaltzustands einer Fahr- bzw. Getriebestufe auf ein Kriechmoment einstellbar ist, wobei die auf das Kriechmoment eingestellte Kupplung bei bleibender Betätigung der Fahrzeugbremse nach vorgegebener Verzögerungszeit geöffnet wird, oder/und das Kriechmoment bei Bremsbetätigung langsam abgebaut wird oder/und bei Betätigung der Fahrzeugbremse ein gegenüber dem Kriechmoment vermindertes Kupplungsmoment eingestellt wird.

Nach der DE 195 30 613 C2 wird eine vorgegebene Kriechgeschwindigkeit als Regelgröße für die Steuerung einer automatischen Kraftfahrzeugkupplung herangezogen, wenn eine vorgegebene Getriebestufe eingelegt sowie das fahrerseitig zu betätigende Steuerorgan unbetätigt ist und die Fahrgeschwindigkeit einen vorgegebenen Schwellwert unterschreitet.

Weitere bekannte Lösungen in diesem Zusammenhang sind aus der DE 100 29 618 A1, DE 199 56 305 A1, DE 44 26 260 A1, EP 0 761 490 A1, DE 100 38 379 A1 bekannt. Von gewissem Interesse in diesem Zusammenhang sind ferner die DE 199 51 106 A1 und DE 199 22 694 A1.

Bei einigen der angesprochenen bzw. in Bezug genommenen Lösungen des Standes der Technik kann der Fahrer nicht entscheiden, ob er grundsätzlich eine Kriechfunktionalität in einer jeweiligen Situation haben will oder nicht. Das Fahrzeug kriecht auch in von dem Fahrer als unpassend empfundenen Momenten an. Dies gilt insbesondere auch für das systembedingte Kriechen bei Fahrzeugen mit einem Automatikgetriebe und zugeordnetem Drehmomentwandler.

Ist ein separates Bedienungselement, etwa entsprechend DE 100 16 582 A1 zur Aktivierung des Kriechens vorhanden, so ist der Fahrer Herr darüber, ob die Kriechfunktionalität aktiviert ist oder nicht. Ein separates Betätigungselement bedingt aber eine Abweichung von der normalen Bedienungsweise und den normalen Bedienungsabläufen des Kraftfahrzeugs in einer der Intuition zumindest mancher Fahrer widersprechenden Weise.

Demgegenüber schlägt die Erfindung auf Grundlage der Zielsetzung, dass der Fahrer in der Lage sein sollte, selbst entscheiden zu können, ob er ein Kriechen wünscht und akzeptiert bzw. ob er es aktivieren oder deaktivieren will, ein Kraftfahrzeug mit den Merkmalen des Anspruchs 1 vor.

Die Notwendigkeit einer aktiven Aktivierung oder Deaktivierung der Kriechbetriebsart kann von manchen Fahrern zumindest für manche Situationen auch als lästig empfunden werden. Für derartiges Kraftfahrzeug, bei dem die Kriechbetriebsart an sich gezielt durch manuelle Betätigung eines Betätigungselements aktivierbar und deaktivierbar ist, schlägt die Erfindung nach einem anderen Aspekt vor, dass wenigstens eine Fahrzeuggrundeinstellung vorgesehen ist oder - vorzugsweise - einstellbar ist, nach der für wenigstens eine Fahrzeugsituation das Aktiviert-Sein der Kriechbetriebsart vorgegeben ist oder nach der für wenigstens eine Fahrzeugsituation das Nicht-Aktiviert-Sein der Kriechbetriebsart vorgegeben ist. Besonders bevorzugt ist, dass für die Fahrzeuggrundeinstellung wahlweise das Aktiviert-Sein der Kriechbetriebsart und das Nicht-Aktiviert-Sein der Kriechbetriebsart einstellbar ist. In diesem Falle ist der Fahrer sogar noch Herr über die Fahrzeuggrundeinstellung.

Ausgestalltungen sind in den abhängigen Ansprüchen enthalten.

Weiterbildend wird vorgeschlagen, dass bezogen auf wenigstens einen relevanten Fahrzeugbetriebszustand oder wenigstens einen relevanten Fahrzeugbetriebszustandsbereich das Aktiviert-Sein oder Nicht-Aktiviert-Sein der Kriechbetriebsart zum Zeitpunkt des Übergangs in einen anderen Fahrzeugbetriebszustand oder Fahrzeugbetriebszustandsbereich die Fahrzeuggrundeinstellung für den relevanten Fahrzeugbetriebszustand oder Fahrzeugbetriebszustandsbereich im Falle dessen Wiederauftretens bestimmt.

Eine andere vorteilhafte Ausgestaltungsmöglichkeit ist, dass die Fahrzeuggrundeinstellung zwangsläufig nach dem Auftreten wenigstens eines vorgegebenen Fahrzeugzustands oder nach dem Auftreten eines von mehreren Fahrzeugzuständen oder/und nach einer definierten Änderung des Fahrzeugzustands wirksam ist. Beispielsweise kann die Fahrzeuggrundeinstellung zwangsläufig nach einem Fahrzeugstart oder/und nach einem Übergang Fahren-Anhalten oder Fahren-Ausrollen wirksam sein.

Auch betreffend den Erfindungsvorschlag nach dem zweiten Aspekt der Erfindung wird vorgeschlagen, dass die Kriechbetriebsart im Falle des Nicht-Aktiviert-Seins durch eine definierte manuelle Betätigung eines fahrerseitig zu betätigenden Fahrsteuerorgans, insbesondere Fahrpedal, des Kraftfahrzeugs aktivierbar ist.

Betreffend die Aktivierung der Kriechbetriebsart durch die definierte manuelle Betätigung des fahrseitig zu betätigenden Fahrsteuerorgans, insbesondere Fahrpedal, des Kraftfahrzeugs wird weiterbildend vorgeschlagen, dass die Aktivierung in Abhängigkeit von wenigstens einem weiteren Betriebsparameter des Kraftfahrzeugs, vorzugsweise einer momentanen Geschwindigkeit des Kraftfahrzeugs, erfolgt. Beispielsweise wird es in der Regel zweckmäßig sein, wenn die Kriechbetriebsart nur bei stillstehendem Kraftfahrzeug oder bei unter einem Schwellenwert liegender momentaner Geschwindigkeit des Kraftfahrzeugs aktivierbar ist.

Um eine ungewünschte Aktivierung der Kriechbetriebsart zuverlässig zu vermeiden, kann vorteilhaft eine Abprüffunktionalität vorgesehen sein, die die Betätigung des Fahrsteuerorgans mit wenigstens einem vorgegebenen Betätigungsmuster vergleicht und die Aktivierung der Kriechbetriebsart nur dann freigibt, wenn die Betätigung des Fahrsteuerorgans gemäß wenigstens einem vorgegebenen Übereinstimmungskriterium mit wenigstens einem Positiv-Betätigungsmuster übereinstimmt oder/und die Betätigung des Fahrpedals gemäß wenigstens einem vorgegebenen Übereinstimmungskriterium mit keinem Negativ-Betätigungsmuster übereinstimmt.

Das Rangieren eines Kraftfahrzeugs wird dadurch erleichtert, wenn das in der Kriechbetriebsart auftretende Kriechmoment durch den Fahrer einstellbar ist. Dies kann nach einer bevorzugten Ausgestaltung unter Vermittlung des Fahrsteuerorgans erfolgen.

Die erfindungsgemäße Deaktivierung oder zumindest momentane Deaktivierung des Kriechmoments entspricht der Intuition des Fahrers . Hierzu wird erfindungsgemäß vorgeschlagen, dass die Kriechbetriebsart durch eine definierte manuelle Betätigung einer Bremseinrichtung des Kraftfahrzeugs zumindest momentan deaktivierbar ist. Die Deaktivierung oder zumindest momentane Deaktivierung kann dabei in Abhängigkeit von wenigstens einem weiteren Betriebsparameter des Kraftfahrzeugs, beispielsweise einer momentanen Geschwindigkeit des Kraftfahrzeugs, erfolgen. Es ist aber auch durchaus sinnvoll, wenn die definierte manuelle Betätigung unabhängig von wenigstens einem weiteren Betriebsparameter des Kraftfahrzeugs zur zumindest momentanen Deaktivierung der Kriechbetriebsart führt.

Die Kriechbetriebsart kann durch die definierte manuelle Betätigung der Bremseinrichtung dauerhaft, nämlich bis zu einer erneuten Aktivierung der Kriechbetriebsart durch die definierte manuelle Betätigung des Fahrsteuerorgans oder/und gemäß einem Wirksam werden einer das Aktiviert-Sein der Kriechbetriebsart vorgebenden Fahrzeuggrundeinstellung, deaktivierbar sein. Eine derartige Auslegung des Kraftfahrzeugs bzw. eine derartige, ggf. auswählbare Grundeinstellung des Kraftfahrzeugs ist insbesondere im Hinblick auf eine hohe Sicherheit gegen Fehlbedienungen und für den Fall eines Führens des Kraftfahrzeugs durch einen mit diesem weniger vertrauten Fahrer vorteilhaft.

Eine andere, insbesondere im Hinblick auf eine einfache und der Intuition entsprechende Steuerbarkeit des Kriechens auch im Sinne einer Reduzierung des Kriechmoments durch den Fahrer vorteilhafte Möglichkeit der Ausgestaltung des Kraftfahrzeugs bzw. des Vorsehens einer entsprechenden einstellbaren Grundeinstellung ist, dass das in der Kriechbetriebsart auftretende Kriechmoment unter Vermittlung einer manuellen Betätigung einer/der Bremseinrichtung des Kraftfahrzeugs im Sinne einer Reduzierung einstellbar ist, derart, dass die Kriechbetätigungsart während der manuellen Betätigung weiter aktiviert bleibt, und vorzugsweise derart, dass das zum Ende der manuellen Betätigung eingestellte Kriechmoment nach Beendigung der manuellen Betätigung erhalten bleibt.

Um Fehlbedienungen zuverlässig zu vermeiden, kann vorteilhaft eine Abprüffunktionalität vorgesehen sein, die die Betätigung der Bremseinrichtung mit wenigstens einem vorgegebenen Betätigungsmuster vergleicht und die Deaktivierung der Kriechbetriebsart bzw. die Reduzierung des Kriechmoments nur dann freigibt, wenn die Betätigung der Bremseinrichtung gemäß wenigstens einem vorgegebenen Übereinstimmungskriterium mit wenigstens einem Positiv-Betätigungsmuster übereinstimmt oder/und die Betätigung der Bremseinrichtung gemäß wenigstens einem vorgegebenen Übereinstimmungskriterium mit keinem Negativ-Betätigungsmuster übereinstimmt.

Bei der angesprochenen Bremseinrichtung kann es sich um eine Betriebsbremseinrichtung des Kraftfahrzeugs handeln. In diesem Falle kann die Bremseinrichtung mittels eines Bremssteuerorgans, insbesondere Bremspedal, manuell betätigbar sein, wobei vermittels des Bremssteuerorgans das Kriechmoment reduzierbar oder/und die Kriechbetriebsart deaktivierbar ist.

Bei der angesprochenen Bremseinrichtung kann es sich aber auch um eine Feststellbremseinrichtung des Kraftfahrzeugs handeln. Die Bremseinrichtung kann mittels einer vorzugsweise ein Pedal oder einen Handhebel oder einen Schalter aufweisenden Betätigungseinrichtung manuell betätigbar sein, wobei vermittels der Betätigungseinrichtung (insbesondere des Pedals oder Handhebels oder Schalters) das Kriechmoment reduzierbar oder/und die Kriechbetriebsart deaktivierbar ist.

Bei dem Getriebe kann es sich um ein automatisches Getriebe handeln, dem, wie herkömmlich üblich, eine Drehmomentwandlereinrichtung oder eine Anfahrkupplungseinrichtung, beispielsweise nasslaufendeAnfahrkupplungseinrichtung, als Momentenübertragungseinrichtung zugeordnet sein kann. Es kann sich bei dem automatischen Getriebe um ein automatisches Stufengetriebe oder auch um ein stufenloses automatisches Getriebe, beispielsweise mit Stahlschub-Gliederband oder dergleichen, handeln. Im Falle einer Drehmomentwandlereinrichtung, die bei laufender Antriebseinheit (etwa Brennkraftmaschine oder Verbrennungsmotor) inhärent ein Kriechmoment überträgt, kann zur Deaktivierung der Kriechbetriebsart das Kriechmoment durch entsprechende Betätigung einer/der Bremseinrichtung abbremsbar sein.

Allgemein wird vorgeschlagen, dass die Momentenübertragungseinrichtung eine Drehmomentwandlereinrichtung umfasst. Ferner wird vorgeschlagen, dass die Momentenübertragungseinrichtung eine automatisiert betätigbare Reibungskupplungseinrichtung umfasst. Das Kriechmoment in der Kriechbetriebsart kann durch entsprechende Betätigung der Reibungskupplungseinrichtung in Einrückrichtung einstellbar sein.

Die angesprochene Reibungskupplungseinrichtung kann als Einfach-Kupplungseinrichtung ausgebildet sein, die eine einer Getriebeeingangswelle des Getriebes zugeordnete Kupplungsanordnung aufweist. Bei der Reibungskupplungseinrichtung kann es sich aber auch um eine so genannte Doppel- oder Mehrfach-Kupplungseinrichtung handeln, die wenigstens zwei jeweils einer eigenen Getriebeeingangswelle des Getriebes zugeordnete, unabhängig voneinander betätigbare Kupplungsanordnungen aufweist. Bei dem Getriebe kann es sich in diesem Fall um ein so genanntes Doppelkupplungsgetriebe oder Lastschaltgetriebe handeln.

Allgemein wird ferner vorgeschlagen, dass die Momentenübertragungseinrichtung eine vorzugsweise nasslaufende Anfahrkupplungseinrichtung aufweist.

In der Regel wird es zweckmäßig sein, wenn das Kriechmoment auf der Einstellung eines von der Antriebseinheit bereitgestellten Antriebsmoments oder/und wenigstens eines von der Momentenübertragungseinrichtung zum Getriebe übertragenen Übertragungsmoments basiert. Das Übertragungsmoment kann das in der Kriechbetriebsart von der Momentenübertragungseinrichtung übertragbare Moment sein. Ferner kann das Kriechmoment auf der Einstellung eines Bremsmoments einer/der Bremseinrichtung des Kraftfahrzeugs basieren, beispielsweise auf die Weise, dass das bei laufender Antriebseinheit von der Momentenübertragungseinrichtung übertragene Antriebsmoment bzw. Übertragungsmoment teilweise (zur Einstellung des Kriechmoments) oder vollständig (zur Deaktivierung der Kriechbetriebsart) abgebremst wird.

Das Fahrzeug kann vorteilhaft eine elektronische Steuereinheit aufweisen, unter deren Vermittlung auf Grundlage einer entsprechenden Ansteuerung des Antriebsstrangs oder/und der Antriebseinheit oder/und der Momentenübertragungseinrichtung oder/und des Getriebes oder/und einer/der Bremseinrichtung des Kraftfahrzeugs die Kriechbetriebsart aktivierbar und deaktivierbar oder/und das Kriechmoment einstellbar ist.

Die Erfindung stellt ferner ein Verfahren zum Betrieb eines erfindungsgemäßen Kraftfahrzeugs bereit, bei dem der Antriebsstrang oder/und die Antriebseinheit oder/und die Momentenübertragungseinrichtung oder/und das Getriebe oder/und eine/die Bremseinrichtung des Kraftfahrzeugs zur Aktivierung bzw. Deaktivierung einer Kriechbetriebsart oder/und zur Einstellung eines Kriechmoments angesteuert wird. Nach dem ersten Erfindungsaspekt ist vorgesehen, eine manuelle Betätigung eines Fahrsteuerorgans, insbesondere Fahrpedals, zu erfassen und die Kriechbetriebsart auf Grundlage der erfassten manuellen Betätigung des Fahrsteuerorgans zu aktivieren. Nach dem zweiten Erfindungsaspekt ist die Vorgabe oder - vorzugsweise - Vorgebbarkeit des Aktiviert-Seins der Kriechbetriebsart oder des Nicht-Aktiviert-Seins der Kriechbetriebsart im Sinne wenigstens einer Fahrzeuggrundeinstellung vorgesehen. Vorteilhaft kann der Erfindungsvorschlag nach dem ersten Aspekt mit dem Erfindungsvorschlag nach dem zweiten Aspekt kombiniert werden.

Die sich auf die Aktivierung oder das Aktiviert-Sein bzw. die Deaktivierung oder das Nicht-Aktiviert-Sein der Kriechbetriebsart bzw. die Einstellung des Kriechmoments beziehenden Vorschläge betreffend das erfindungsgemäße Kraftfahrzeug kommen entsprechend, in verfahrensmäßiger Ausprägung, als vorteilhafte Ausgestaltungen des bzw. der erfindungsgemäßen Verfahren in Betracht.

Weitere Ausgestaltungsmöglichkeiten betreffend ein erfindungsgemäßes Kraftfahrzeug bzw. ein erfindungsgemäßes Verfahren werden dem Fachmann auf Grundlage der Offenbarung der eingangs angesprochenen Schriften des Standes der Technik einfallen, die ihm auch geeignete Realisierungsmittel für die Realisierung der Erfindungsvorschläge und Weiterbildungsvorschläge der Erfindung an die Hand geben. Die Offenbarung dieser Schriften des Standes der Technik wird deswegen durch Bezugnahme vollständig in die Offenbarung der vorliegenden Anmeldung einbezogen.

Die Erfindung wird im Folgenden anhand von in den Figuren gezeigten Ausführungsbeispielen näher erläutert.
- Fig. 1: zeigt schematisch einen Kraftfahrzeug-Antriebsstrang mit einer Lamellen-Doppelkupplung und einem Lastschaltgetriebe, wobei der Antriebsstrang unter Vermittlung einer zugeordneten Steuereinheit entsprechend der Erfindung in wenigstens einer Kriechbetriebsart betreibbar ist.
- Fig. 2: zeigt schematisch ein weiteres Beispiel eines Kraftfahrzeug-Antriebsstrangs mit einem Automatikgetriebe und einem dem Automatikgetriebe vorgeschalteten Drehmomentwandler, wobei der Antriebsstrang unter Vermittlung einer zugeordneten Steuereinheit entsprechend der Erfindung in wenigstens einer Kriechbetriebsart betreibbar ist.
- Fig. 3: zeigt schematisch ein weiteres Beispiel eines Kraftfahrzeug-Antriebsstrangs mit einer Einfach-Kupplung der Reibscheibenbauart und einem automatisierten Getriebe, wobei der Antriebsstrang unter Vermittlung einer zugeordneten Steuereinheit entsprechend der Erfindung in wenigstens einer Kriechbetriebsart betreibbar ist.
- Fig. 4: zeigt ein Flussdiagramm, das eine Möglichkeit für die erfindungsgemäße Aktivierung einer Kriechbetriebsart bei einem Kraftfahrzeug auf Grundlage einer manuellen Betätigung eines Fahrsteuerorgans, vorliegend eines Fahrpedals, aufzeigt.
- Fig. 5: zeigt ein Flussdiagramm, das eine Möglichkeit für eine Beendigung der Kriechbetriebsart eines Kraftfahrzeugs durch Betätigung einer Bremseinrichtung des Kraftfahrzeugs aufzeigt.
- Fig. 6: zeigt ein weiteres Flussdiagramm betreffend die Beendigung einer Kriechbetriebsart eines Kraftfahrzeugs, das einer Ausführungsvariante der Ausführungsform gemäß Fig. 5 entspricht.
- Fig. 7: zeigt ein weiteres Flussdiagramm betreffend die Beendigung einer Kriechbetriebsart eines Kraftfahrzeugs, dass einer weiteren Ausführungsvariante der Ausführungsform gemäß Fig. 5 entspricht.

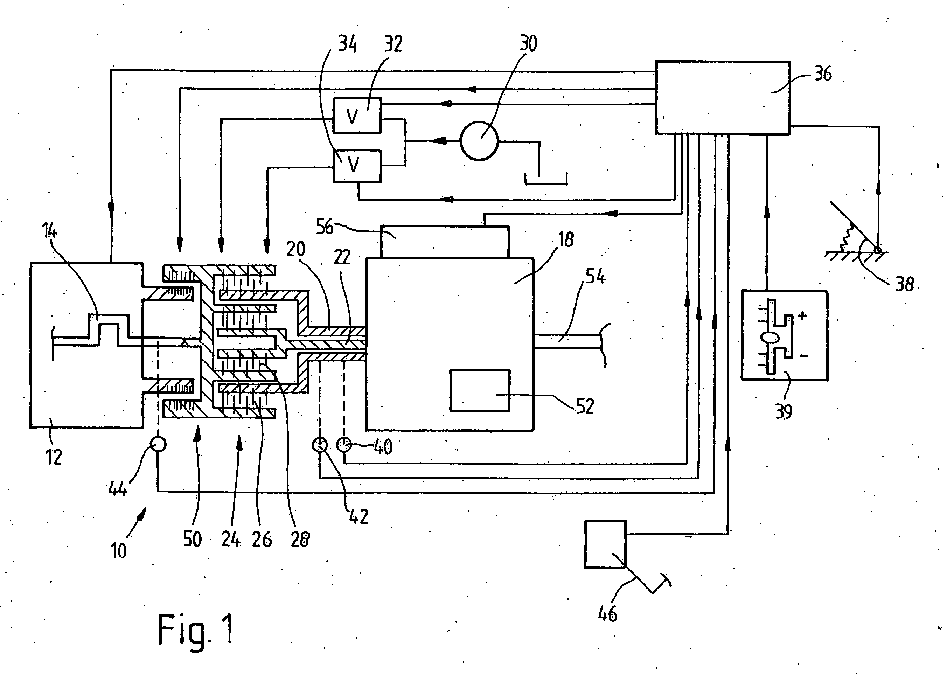

Fig. 1 zeigt ein Beispiel für einen Aritriebsstrang 10 eines Kraftfahrzeugs. Der Antriebsstrang weist eine Antriebseinheit 12 in Form einer Brennkraftmaschine, speziell eines Verbrennungsmotors auf, wie durch eine symbolhaft gezeichnete Kurbelwelle 14 angedeutet ist. Ein so genanntes Lastschaltgetriebe 18 mit zwei radial geschachtelten Getriebeeingangswellen 20 und 22 ist über eine Doppelkupplung 24 mit dem Motor 12 verbunden. Die Doppelkupplung 24 umfasst zwei Kupplungsanordnungen 26 und 28, von denen die eine der Getriebeeingangswelle 20 und die andere der Getriebeeingangswelle 22 zugeordnet ist. Beim Ausführungsbeispiel handelt es sich um nasslaufende Lamellen-Kupplungsanordnungen, die vermittels eines jeweiligen, in die Doppelkupplung integrierten hydraulischen Nehmerzylinders (nicht dargestellt) auf hydraulischem Wege betätigbar sind. Eine entsprechende Hydraulikpumpe 30 ist schematisch dargestellt. Ein der Doppelkupplung zugeordneter Kühlölkreislauf mit einer Kühlölpumpe usw. ist nicht dargestellt. Geeignete Doppelkupplungskonstruktionen sind beispielsweise aus der DE 100 04 179 A1 bekannt.

Die Betätigung der beiden Kupplungsanordnungen erfolgt unter Vermittlung von Steuerventilen 32 und 34, die von einer Steuereinheit 36 elektrisch ansteuerbar sind. Die Steuereinheit empfängt Eingangssignale von einem Gas- oder Fahrpedal 38, einer Gang-Wähl- oder/und Beeinflussungseinheit 39, einem der Getriebeeingangswelle 20 zugeordneten Drehzahlsensor 40, einem der Getriebeeingangswelle 22 zugeordneten Drehzahlsensor 42 und einem der Motorabtriebswelle (Kurbelwelle 14) zugeordneten Drehzahlsensor 44. Die Steuereinheit kann ferner weitere Signale und Messwerte von anderen Sensoren und Signalgebern erhalten, etwa einem Fahrzeuggeschwindigkeitssensor, einem Lenkwinkelsensor, einem Bremsbetätigungszustandssensor (etwa des in Fig. 1 gezeigten Bremspedals 46) usw..

Durch Vergleich der Drehzahl des Drehzahlsensors 44 einerseits und der Drehzahl des Drehzahlsensors 40 bzw. 42 andererseits kann die Steuereinheit einen Schlupfzustand der Kupplungsanordnung 26 bzw. der Kupplungsanordnung 28 bestimmen. Die Steuereinheit 36 steuert ein Leistungsstellglied des Motors 12 an, um die vom Motor abgegebene Leistung bzw. das vom Motor abgegebene Moment einzustellen.

In Fig. 1 ist ein Kurbelwellenstartergenerator 50 dargestellt, der eine am Motor 12 angeordnete Statoranordnung und eine an der Eingangsseite der Doppelkupplung 24 angeordnete Rotoranordnung aufweist. Der Kurbelwellenstartergenerator 50 wird durch die Steuereinheit 36 aktiviert, insbesondere um den Motor 12 anzulassen.

Zum auch als Doppelkupplungsgetriebe bezeichenbaren Lastschaltgetriebe 18 ist noch anzumerken, dass es sich bevorzugt um ein voll synchronisiertes Getriebe mit einer entsprechenden Synchronisiereinrichtung 52 handelt. Bei der Synchronisiereinrichtung 52 braucht es sich nicht um eine zentrale Synchronisiereinrichtung für das ganze Getriebe handeln. Die Synchronisiereinrichtung kann auch von herkömmlichen Synchronisiermitteln, etwa in Form von Synchronringen, gebildet sein. Eine Abtriebswelle des Getriebes ist mit 54 bezeichnet. Das Getriebe wird vorzugsweise vollautomatisiert mittels einer von der Steuereinheit 36 entsprechend ansteuerbaren Betätigungseinrichtung 56 betätigt.

Anstelle einer Doppelkupplung 24 mit zwei nasslaufenden Lamellen-Kupplungsanordnungen 26 und 28 könnte - in Abweichung von der Darstellung in Fig. 1 - alternativ auch eine Doppelkupplung 24 mit zwei trockenlaufenden Kupplungsanordnungen 26 und 28 der Reibscheibenbauart vorgesehen sein. Die beiden Reibscheiben-Kupplungsanordnungen könnten beispielsweise mittels in die Doppelkupplung integrierten hydraulischen Nehmerzylindern auf hydraulischem Wege betätigbar sein. Entsprechende Realisierungsmöglichkeiten sind beispielsweise aus der DE 35 26 630 A1 entnehmbar. Es könnten aber auch völlig anders konstruierte trockenlaufende Doppelkupplungen eingesetzt werden, es wird beispielsweise auf die EP 0 931 951 A1 verwiesen.

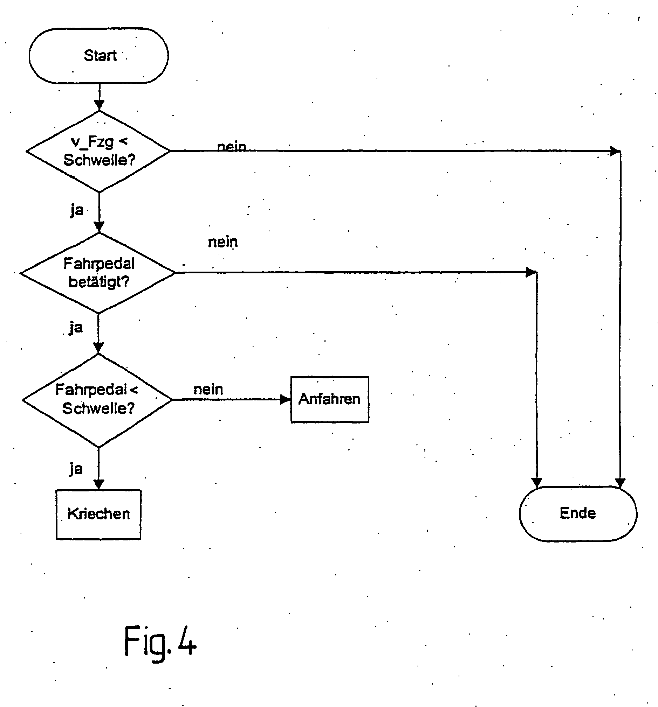

Auf Grundlage wenigstens eines Anfahrgangs des Getriebes 18 sowie vorzugsweise auch, je nach Fahrerwunsch, auf Grundlage des Rückfahrgangs ist für den Antriebsstrang der Fig. 1 bzw. das entsprechende Kraftfahrzeug eine Kriechbetriebsart implementiert, um ein Rangieren des Fahrzeugs zu erleichtern. Nach der Erfindung ist die Kriechbetriebsart unter Vermittlung des Gas- oder Fahrpedals 46 aktivierbar. Dabei kann vorgesehen sein, dass die Aktivierung der Kriechbetriebsart vermittels des Fahrpedals nur bei stillstehendem Fahrzeug oder bei einer eine Geschwindigkeitsschwelle unterschreitenden Fahrzeuggeschwindigkeit (v_Fzg; vgl. Fig. 4) möglich ist, ggf. unter der Voraussetzung, dass das Fahrpedal zuvor nicht betätigt wurde. Die Aktivierung kann beispielsweise durch ein leichtes, kurzes (z. B. < 500 ms) Antippen oder Doppelantippen des Fahrpedals innerhalb eines vorgegebenen Zeitintervalls erfolgen. Eine andere Möglichkeit ist, dass der Fahrer mittels des Gaspedals nicht nur die Aktivierung der Kriechbetriebsart anweist, sondern mittels des Fahrpedals auch das gewünschte Kriechmoment signalisiert. Um zwischen einem Anfahrwunsch und dem Wunsch nach der Aktivierung der Kriechbetriebsart zu entscheiden, kann vorgesehen sein, dass eine einen Schwellenwert übersteigende Betätigung des Fahrpedals als Anfahrwunsch interpretiert wird. Fig. 4 zeigt ein Flussdiagramm, das eine bevorzugte Auswertung der fahrerseitigen Fahrpedalbetätigung durch eine Steuereinheit, beispielsweise die Steuereinheit 36 der Fig. 1, im Hinblick auf einen Anfahrwunsch und den Wunsch nach Aktivierung der Kriechbetriebsart veranschaulicht.

Ergibt die Auswertung, dass die Kriechbetriebsart zu aktivieren ist, so wird hierzu im Falle der Ausführungsform der Fig. 1 die dem betreffenden Anfahrgang oder dem Rückwärtsgang (vom Fahrer mittels der Wähleinrichtung 39 wählbar) zugeordnete Kupplungsanordnung 26 oder 28 entsprechend einem vorgegebenen Kriechmoment oder dem durch den Fahrer vermittels des Fahrpedals angegebenen Kriechmoment eingerückt und damit ein Ankriechen des Fahrzeugs bewirkt. Daraufhin kriecht das Fahrzeug bei Loslassen des Fahrpedals entsprechend dem vorgegebenen bzw. eingestellten Kriechmoment los oder weiter, und es stellt sich eine dem Kriechmoment entsprechende Kriechgeschwindigkeit ein. Die Variante, bei der vermittels des Fahrpedals das Kriechmoment eingestellt wird, bietet den Vorteil, dass eine hohe Zuverlässigkeit gegen Fehlbedienungen besteht, da kein unbeabsichtigtes Ankriechen durch unbeabsichtigtes Antippen des Fahrpedals ausgelöst wird.

Bei der vorangehenden Erläuterung war davon ausgegangen, dass ein entsprechender Anfahrgang bzw. der Rückwärtsgang schon eingelegt ist. Ist dies hingegen noch nicht der Fall, so legt die Steuereinheit 36 unter Vermittlung der Betätigungseinrichtung 56 zur Aktivierung der Kriechfunktionalität den entsprechenden Anfahrgang bzw. den Rückwärtsgang ein, bevor sie dann unter Vermittlung der dem jeweiligen Gang zugeordneten Kupplungsanordnung das Kriechmoment einstellt.

Ein wichtiger Gesichtspunkt ist, dass die Steuereinheit 36 zuverlässig zwischen einem Wunsch nach Aktivierung der Kriechfunktionalität und einem Anfahrwunsch unterscheiden sollte, welche beide mittels des Fahrpedals 38 eingeleitet werden. Wie schon im Zusammenhang mit Fig. 4 erwähnt, kann vorgesehen sein, dass ein Fahrerwunsch-Kriechmoment nur bis zu einem oberen Grenzmoment tatsächlich als Kriechmoment identifiziert wird mit entsprechender Aktivierung der Kriechfunktionalität, und dass höhere Wunschmomente dann als Anfahrmoment und damit als Signalisierung des Anfahrwunsches identifiziert werden.

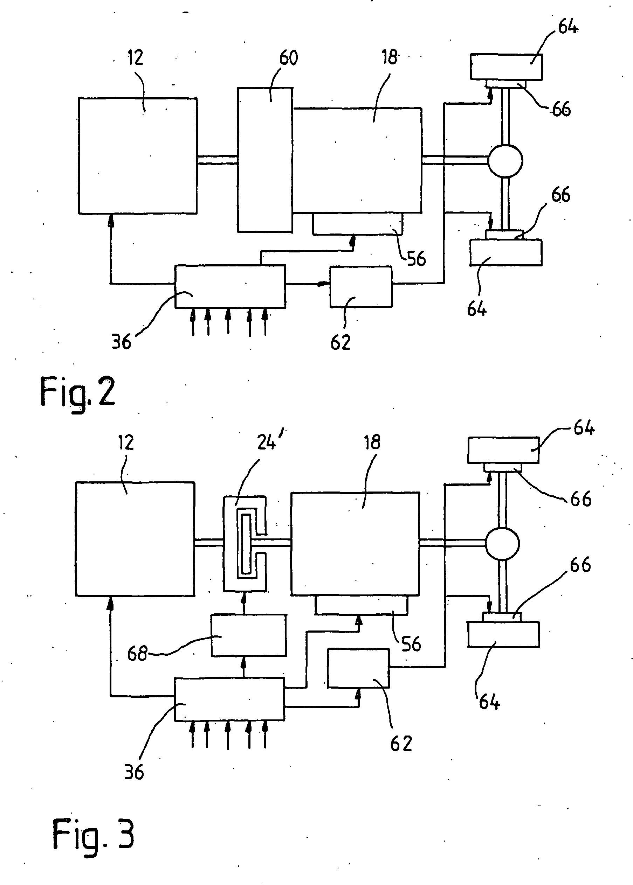

Man kann vorteilhaft vorsehen, das die Kriechfunktionalität mittels einer Betätigung der Bremsanlage des Kraftfahrzeugs, also beispielsweise mittels des Bremspedals 46, deaktivierbar ist. Nach Deaktivierung der Kriechfunktionalität sollte das Kraftfahrzeug auch bei nicht betätigtem Bremspedal nicht ankriechen. Im Falle des Antriebsstrangs der Fig. 1 kann hierzu vorgesehen sein, dass die betreffende Kupplungsanordnung so weit ausgerückt wird bzw. bleibt, dass sie kein Drehmoment (kein Kriechmoment) mehr überträgt. In Abhängigkeit von den Umständen und der Auslegung eines jeweiligen Kraftfahrzeug-Antriebsstrang kann es durchaus aber auch sinnvoll sein, zur momentanen oder dauerhaften Deaktivierung der Kriechbetriebsart ein Bremsmoment mittels einer Bremseinrichtung des Kraftfahrzeugs bzw. des Antriebsstrangs aufzubringen. Es wird hierzu auf das Ausführungsbeispiel der Fig. 2 mit einem Drehmomentwandler verwiesen, der inhärent ein Kriechmoment überträgt. Ist ein Kriechen nicht gewünscht, so kann das Kriechmoment beispielsweise vermittels der normalen Betriebsbremsanlage des Fahrzeugs zur Null gebracht werden. Eine andere Möglichkeit ist eine Betätigung des Automatikgetriebes in der Weise, dass dieses kein Moment mehr zur Abtriebswelle überträgt, beispielsweise entsprechend einem Neutral-(N)-Getriebezustand, obwohl der Fahrer an sich den Vorwärtsfahr-(D)-Getriebezustand oder den Rückwärtsfahr-(R)-Getriebezustand gewählt hat.

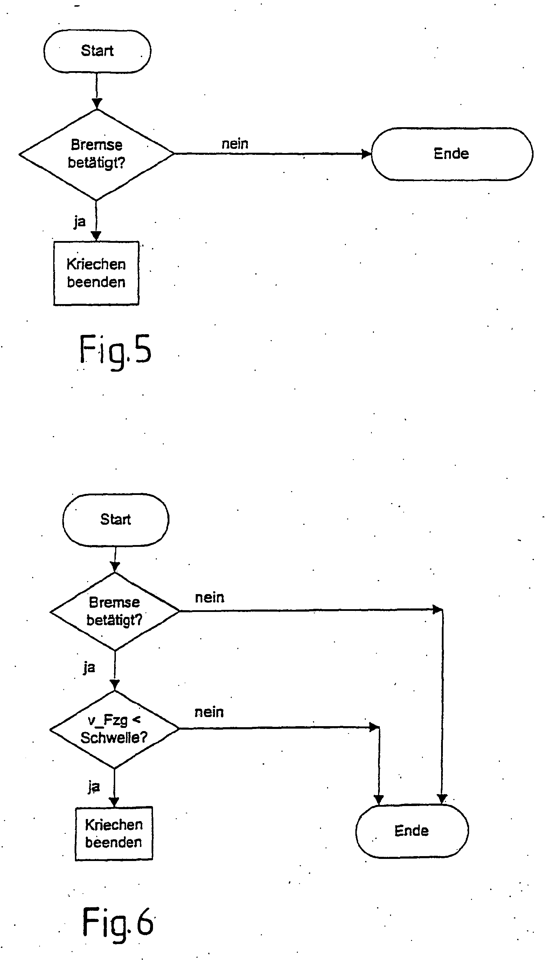

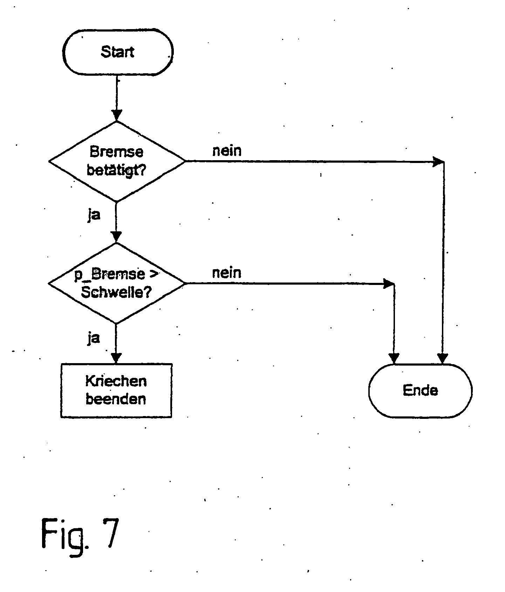

Im Zusammenhang mit der Deaktivierung der Kriechbetriebsart durch Betätigung der Betriebsbremsanlage des Kraftfahrzeugs bestehen verschiedene Möglichkeiten. Gemäß der im Flussdiagramm der Fig. 5 veranschaulichten Möglichkeit wird das Kriechen bei Betätigung des Bremspedals grundsätzlich abgeschaltet und bleibt auch nach Lösen des Bremspedals deaktiviert. Demgegenüber ist die in Fig. 6 veranschaulichte Möglichkeit vorteilhafter. Nach dieser Möglichkeit wird das Kriechen mittels des Bremspedals erst bei detektierten Fahrzeugstillstand bzw. einer einen Schwellenwert unterschreitender Fahrzeuggeschwindigkeit (v_Fzg) deaktiviert. Eine andere, ebenfalls vorteilhafte Möglichkeit ist, dass die Kriechbetriebsart nur auf die Erfassung eines relativ kräftigen, auf das Bremspedal wirkenden Betätigungsimpulses hin deaktiviert wird. Es wird hierzu auf das Beispiel der Fig. 7 verwiesen, bei der ein Bremsdruck (p_Bremse) mit einer Schwelle verglichen wird. Man kann diese Möglichkeiten auch vorteilhaft kombinieren. Nach dieser besonders bevorzugten Variante wird das Kriechen mittels des Bremspedals erst bei detektierten Fahrzeugstillstand oder/und auf die Erfassung eines relativ kräftigen Betätigungsimpulses auf das Bremspedal deaktiviert. Der Vorteil der vorstehend vorgestellten Lösungen ist, dass die Kriechgeschwindigkeit während eines Rangierens mittels der Bremse vom Fahrer reguliert werden kann, ohne dass die Bremsbetätigung zwangsläufig zu einer Deaktivierung der Kriechbetriebsart führt. Erst nach erfolgtem Rangieren des Fahrzeugs, wenn das Kriechen dann nicht mehr benötigt wird, kann dieses dann auf die angegebene Weise mittels des Bremspedals deaktiviert werden.

Betreffend die Deaktivierung der Kriechbetriebsart unter Vermittlung des Bremspedals sind noch diverse Varianten denkbar. Beispielsweise kann die Deaktivierung der Kriechfunktionalität von der Dauer der Bremspedalbetätigung abhängen, so dass z. B. ein kurzes Antippen des Bremspedals das Kriechen deaktiviert. In allen diesen Fällen muss die Steuereinheit anhand der Art und Weise der Bremsbetätigung (etwa Dauer oder/und Stärke der Bremsbetätigung) sowie ggf. in Abhängigkeit von weiteren Parametern, etwa der momentanen Fahrzeuggeschwindigkeit, entscheiden, ob die Kriechfunktionalität deaktiviert werden soll und ob eine die Kriechbetriebsart erhaltende Betätigung der Fahrzeugbremse vorliegt. Man kann in diesem Zusammenhang auch vorsehen, dass in dem Falle, dass es nicht zu einer Deaktivierung der Kriechfunktionalität kommt, das auf die Laufräder des Fahrzeugs wirkende Kriechmoment entsprechend der zuvor erfolgten Bremsbetätigung reduziert wird, die Kriechgeschwindigkeit also entsprechend reduziert wird. Dies kann durch entsprechendes Ausrücken der betreffenden Kupplungsanordnung oder/und durch andauernde Betätigung der Betriebsbremse des Kraftfahrzeugs erfolgen.

Es kann vorgesehen sein, dass der Fahrer betreffend die Aktivierung bzw. Nicht-Aktivierung der Kriechfunktionalität eine entsprechende Fahrzeuggrundeinstellung wählen kann, die im Falle eines Fahrzeugstillstands zur Wirkung kommt, wobei es sich bei dem Fahrzeugstillstand entweder um einen Stillstand nach einem Fahrzeugstart oder um einen Stillstand nach einem Übergang Fahren/Anhalten bzw. Ausrollen handelt oder - alternativ - um einen beliebigen Fahrzeugstillstand. Eine Möglichkeit in diesem Zusammenhang ist, dass die in einem betreffenden Fahrzeug-Stillstandszustand wirksame Fahrzeuggrundeinstellung denjenigen Kriechzustand vorgibt, in welchen der Fahrer das Kraftfahrzeug beim letzten Fahrzeugstillstand versetzt hat. Eine andere Möglichkeit ist, dass die Fahrzeuggrundeinstellung bei jedem neuen Übergang vom Fahren zum Anhalten oder nach dem Motorstart dieselbe, vom Fahrer einmalig festgelegte Vorgabe macht, nämlich dass die Kriechbetriebsart entweder grundsätzlich aktiviert oder grundsätzlich deaktiviert ist. Es sind diverse Varianten denkbar, z. B. dass unmittelbar nach einem Fahrzeugstart stets die gleiche Vorgabe gemacht wird (entweder Kriechen aktiviert oder Kriechen deaktiviert), und dass bei jedem weiteren Fahrzeugstillstand eine Grundeinstellung wirksam wird, die die letzte Fahrereinstellung betreffend Deaktivierung bzw. Nicht-Aktivierung der Kriechbetriebsart vorgibt.

Die Grundeinstellung des Fahrzeugs betreffend die Aktivierung und Nicht-Aktivierung der Kriechbetriebsart, insbesondere die Vorgabe, dass das Kriechen prinzipiell aktiviert ist oder prinzipiell nicht aktiviert ist, kann beispielsweise über ein Display mittels eines Multifunktions-Betätigungselements oder über ein separates Betätigungselement vorgewählt werden.

Es sind diverse Ausgestaltungen und Realisierungsvarianten denkbar. Der Fachmann kann entsprechend Anregungen und Realisierungsmittel aus dem umfangreichen Stand der Technik entnehmen, von dem ein Ausschnitt in der Beschreibungseinleitung der vorliegenden Anmeldung identifiziert ist.

Eine Ausgestaltungsmöglichkeit ist beispielsweise jene, dass im Falle einer Betätigung einer Feststellbremse (insbesondere Handbremse) des Kraftfahrzeugs trotz Betätigung des Fahrpedals die Kriechbetriebsart nicht aktiviert wird bzw., wenn schon aktiviert, sofort deaktiviert wird.

Erfindungsgemäße Verfahrensweisen betreffend das Aktivieren/Deaktivieren einer Kriechfunktionalität können auch bei anders aufgebauten Antriebssträngen als in Fig. 1 veranschaulicht vorteilhaft zum Einsatz kommen. So ist oben schon ein Kraftfahrzeug-Antriebsstrang mit einem Automatgetriebe 18 und einem diesem vorgeschalteten Drehmomentwandler 60 angesprochen worden (Fig. 2). Bei laufender Antriebseinheit 12 überträgt der Drehmomentwandler 60 inhärent ein Kriechmoment, das herkömmlich in einem Vorwärtsfahr-(D)-Zustand bzw. einem Rückwärtsfahr-(R)-Zustand des Getriebes nicht abgeschaltet werden kann, es sei denn, dass der Fahrer die Betriebsbremsanlage des Kraftfahrzeugs entsprechend betätigt. Man kann eine Aktivierung- und Deaktivierung des Kriechens entsprechend den hier gemachten Erfindungsvorschlägen auch bei einem derartigen Antriebsstrang dadurch vorsehen, dass beispielsweise die Steuereinheit 36 ein Bremsaggregat 62 des Kraftfahrzeugs derart betätigt, dass unter Vermittlung der den Laufrädern 64 zugeordneten Fahrzeugbremsen 66 das Kriechmoment zu Null gebremst wird. Eine andere Möglichkeit ist eine entsprechende Umschaltung der Getriebezustände, beispielsweise zwischen dem D-Zustand bzw. dem R-Zustand einerseits und dem Neutral-(N)-Zustand andererseits, in Abhängigkeit von der Betätigung des Fahrpedals (Aktivierung des Kriechens) und des Bremspedals (Deaktivierung des Kriechens, ggf. Einstellen des Kriechmoments), wobei entsprechende, vom Fahrer ggf. wählbare Fahrzeuggrundeinstellungen vorgesehen sein können.

Fig. 3 zeigt ein weiteres Beispiel eines Kraftfahrzeug-Antriebsstrangs, bei dem eine erfindungsgemäße Aktivierung/Deaktivierung des Kriechens vorgesehen sein kann. Es handelt sich um einen Antriebsstrang mit einer Einfach-Reibscheibenkupplung 24' und einem automatisierten Schaltgetriebe 18. Die Kupplung 24' ist mittels einer entsprechenden Aktuatorik 68 unter der Ansteuerung der Steuereinheit 36 automatisiert ein- und ausrückbar.

Die vorgeschlagenen Verfahren zum Aktivieren/Deaktivieren einer Kriechfunktionalität sind somit im Prinzip bei jedem Kraftfahrzeug-Antriebsstrang, bei dem ein Kriechmoment auftritt oder einstellbar ist, anwendbar, also etwa bei jeglichen automatisierten Schaltgetrieben mit wenigstens einer Kupplung, bei (automatisierten) Doppel-oder Mehrfachkupplungseinrichtungen mit entsprechendem Getriebe, bei (Stufen-)Automatgetrieben mit und ohne Drehmomentwandler. Anstelle eines Drehmomentwandlers könnte beispielsweise eine (ggf. nasslaufende) Anfahrkupplung vorgesehen sein, bei der ein Kriechen nicht systembedingt ist, aber durch entsprechende Betätigung ein Kriechmoment einstellbar ist.

Zusammenfassend betrifft die Erfindung unter anderem ein Kraftfahrzeug mit einem eine Antriebseinheit, ein Getriebe und eine Momentenübertragungseinrichtung zwischen der Antriebseinheit und dem Getriebe aufweisenden Antriebsstrang, das in wenigstens einer Kriechbetriebsart betreibbar ist, in der ein vorgegebenes oder einstellbares oder aus Betriebsparametern der Antriebsstrangkomponenten oder/und anderer Kraftfahrzeugkomponenten resultierendes Kriechmoment zu angetriebenen oder antreibbaren Laufrädern des Kraftfahrzeugs übertragbar ist oder übertragen wird. Es wird vorgeschlagen, dass die Kriechbetriebsart durch eine definierte manuelle Betätigung eines fahrseitig zu betätigenden Fahrsteuerorgans, insbesondere Fahrpedal, des Kraftfahrzeugs aktivierbar ist oder/und dass wenigstens eine Fahrzeuggrundeinstellung vorgesehen ist oder - vorzugsweise - einstellbar ist, nach der das Aktiviert-Sein der Kriechbetriebsart vorgegeben ist oder nach der das Nicht-Aktiviert-Sein der Kriechbetriebsart vorgegeben ist.

## Patentansprüche

1. Kraftfahrzeug mit einem eine Antriebseinheit (12), ein Getriebe (18) und eine Momentenübertragungseinrichtung (24; 60; 24') zwischen der Antriebseinheit und dem Getriebe aufweisenden Antriebsstrang, das in wenigstens einer Kriechbetriebsart betreibbar ist,
- wobei das Getriebe ein automatisches Getriebe (18) oder ein automatisiert schaltbares Schaltgetriebe (18) ist,
- und **wobei** in der **Kriechbetriebsart** ein vorgegebenes oder einstellbares oder aus Betriebsparametern der Antriebsstrangkomponenten oder/und anderer Kraftfahrzeugkomponenten resultierendes Kriechmoment zu angetriebenen oder antreibbaren Laufrädern (64) des Kraftfahrzeugs übertragbar ist oder übertragen wird,
**dadurch gekennzeichnet,**
- **daß** die Kriechbetriebsart durch eine definierte manuelle Betätigung eines fahrerseitig zu betätigenden Fahrpedals (38) des Kraftfahrzeugs aktivierbar ist, worauf das Fahrzeug bei Loslassen des Fahrpedals loskriecht oder weiterkriecht,
- und **daß** die Kriechbetriebsart durch eine definiert manuelle Betätigung der Bremseinrichtung (46; 62, 66) des Kraftfahrzeugs deaktivierbar ist, wobei nach Deaktivierung der Kriechfunktionalität das Kraftfahrzeug auch bei nicht betätigter Bremseinrichtung nicht ankriecht.

2. Kraftfahrzeug nach Anspruch 1, **dadurch gekennzeichnet, daß** wenigstens eine Fahrzeuggrundeinstellung vorgesehen ist oder einstellbar ist, nach der für wenigstens eine Fahrzeugsituation das Aktiviert-Sein der Kriechbetriebsart vorgegeben ist oder nach der für wenigstens eine Fahrzeugsituation das Nicht-Aktiviert-Sein der Kriechbetriebsart vorgegeben ist.

3. Kraftfahrzeug nach Anspruch 2, **dadurch gekennzeichnet, daß** bezogen auf wenigstens einen relevanten Fahrzeugbetriebszustand oder wenigstens einen relevanten Fahrzeug betriebszustandsbereich das Aktiviert-Sein oder Nicht-Aktiviert-Sein der Kriechbetriebsart zum Zeitpunkt des Übergangs in einen anderen Fahrzeugbetriebszustand oder Fahrzeugbetriebszustandsbereich die Fahrzeuggrundeinstellung für den relevanten Fahrzeugbetriebszustand oder Fahrzeugbetriebszustandsbereich im Falle dessen Wiederauftretens bestimmt.

4. Kraftfahrzeug nach einem der Ansprüche 2 oder 3, **dadurch gekennzeichnet, daß** die Fahrzeuggrundeinstellung zwangsläufig nach dem Auftreten wenigstens eines vorgegebenen Fahrzeugzustands oder nach dem Auftreten eines von mehreren Fahrzeugzuständen oder/und nach einer definierten Änderung des Fahrzeugzustands wirksam ist.

5. Kraftfahrzeug nach Anspruch 4, **dadurch gekennzeichnet, daß** die Fahrzeuggrundeinstellung zwangsläufig nach einem Fahrzeugstart oder/und nach einem Übergang Fahren-Anhalten oder Fahren-Ausrollen wirksam ist.

6. Kraftfahrzeug nach wenigstens einem der Ansprüche 1 bis 5, **dadurch gekennzeichnet, daß** die Kriechbetriebsart durch die definierte manuelle Betätigung des Fahrpedals aktivierbar ist, und zwar in Abhängigkeit von wenigstens einem weiteren Betriebsparameter des Kraftfahrzeugs, vorzugsweise einer momentanen Geschwindigkeit (v_Fzg) des Kraftfahrzeugs.

7. Kraftfahrzeug nach wenigstens einem der Ansprüche 1 bis 6, **dadurch gekennzeichnet, daß** die Kriechbetriebsart nur bei stillstehendem Kraftfahrzeug oder bei unter einem Schwellenwert liegender momentaner Geschwindigkeit (v_Fzg) des Kraftfahrzeugs aktivierbar ist.

8. Kraftfahrzeug nach wenigstens einem der Ansprüche 1 bis 7, **dadurch gekennzeichnet, daß** eine Abprüffunktionalität vorgesehen ist, die die Betätigung des Fahrpedals (38) mit wenigstens einem vorgegebenen Betätigungsmuster vergleicht und die Aktivierung der Kriechbetriebsart nur dann freigibt, wenn die Betätigung des Fahrpedals gemäß wenigstens einem vorgegebenen Übereinstimmungskriterium mit wenigstens einem Positiv-Betätigungsmuster übereinstimmt oder/und die Betätigung des Fahrpedals gemäß wenigstens einem vorgegebenen Übereinstimmungskriterium mit keinem Negativ-Betätigungsmuster übereinstimmt.

9. Kraftfahrzeug nach wenigstens einem der Ansprüche 1 bis 8, **dadurch gekennzeichnet, daß** das in der Kriechbetriebsart auftretende Kriechmoment unter Vermittlung des Fahrpedals (38) einstellbar ist.

10. Kraftfahrzeug nach wenigstens einem der Ansprüche 1 bis 9, **dadurch gekennzeichnet, daß** die Kriechbetriebsart durch die definierte manuelle Betätigung der Bremseinrichtung (46; 62, 66) des Kraftfahrzeugs zumindest momentan deaktivierbar ist, und zwar in Abhängigkeit von wenigstens einem weiteren Betriebsparameter des Kraftfahrzeugs, vorzugsweise einer momentanen Geschwindigkeit (v_Fzg) des Kraftfahrzeugs.

11. Kraftfahrzeug nach einem der Ansprüche 1, 9 oder 10, **dadurch gekennzeichnet, daß** die Kriechbetriebsart durch die definierte manuelle Betätigung der Bremseinrichtung dauerhaft, nämlich bis zu einer erneuten Aktivierung der Kriechbetriebsart durch die definierte manuelle Betätigung des Fahrsteuerorgans (38) oder/und gemäß einem Wirksam werden einer das Aktiviert-Sein der Kriechbetriebsart vorgebenden Fahrzeuggrundeinstellung, deaktivierbar ist.

12. Kraftfahrzeug nach wenigstens einem der Ansprüche 1, 10 oder 11, **dadurch gekennzeichnet, daß** das in der Kriechbetriebsart auftretende Kriechmoment unter Vermittlung der manuellen Betätigung der Bremseinrichtung (46; 62, 66) des Kraftfahrzeugs im Sinne einer Reduzierung einstellbar ist, derart, daß die Kriechbetätigungsart während der manuellen Betätigung weiter aktiviert bleibt, und vorzugsweise derart, daß das zum Ende der manuellen Betätigung eingestellte Kriechmoment nach Beendigung der manuellen Betätigung erhalten bleibt.

13. Kraftfahrzeug nach wenigstens einem der Ansprüche 1 bis 12, **dadurch gekennzeichnet, daß** eine Abprüffunktionalität vorgesehen ist, die die Betätigung der Bremseinrichtung (46; 62, 66) mit wenigstens einem vorgegebenen Betätigungsmuster vergleicht und die Deaktivierung der Kriechbetriebsart bzw. die Reduzierung des Kriechmoments nur dann freigibt, wenn die Betätigung der Bremseinrichtung gemäß wenigstens einem vorgegebenen Übereinstimmungskriterium mit wenigstens einem Positiv-Betätigungsmuster übereinstimmt oder/und die Betätigung der Bremseinrichtung gemäß wenigstens einem vorgegebenen Übereinstimmungskriterium mit keinem Negativ-Betätigungsmuster übereinstimmt.

14. Kraftfahrzeug nach wenigstens einem der Ansprüche 1 bis 13, **dadurch gekennzeichnet, daß** die Bremseinrichtung eine Betriebsbremseinrichtung (46; 62, 66) des Kraftfahrzeugs ist.

15. Kraftfahrzeug nach wenigstens einem der Ansprüche 1 bis 13, **dadurch gekennzeichnet, daß** die Bremseinrichtung eine Feststellbremseinrichtung des Kraftfahrzeugs ist.

16. Kraftfahrzeug nach Anspruch 15, **dadurch gekennzeichnet, daß** die Bremseinrichtung mittels einer ein Pedal oder einen Handhebel oder einen Schalter aufweisenden Betätigungseinrichtung manuell betätigbar ist.

17. Kraftfahrzeug nach wenigstens einem der Ansprüche 1 bis 16, **dadurch gekennzeichnet, daß** die Momentenübertragungeinrichtung eine Drehmomentwandlereinrichtung (60) umfaßt.

18. Kraftfahrzeug nach wenigstens einem der Ansprüche 1 bis 16, **dadurch gekennzeichnet, daß** die Momentenübertragungseinrichtung eine automatisiert betätigbare Reibungskupplungseinrichtung (24; 24') umfaßt.

19. Kraftfahrzeug nach Anspruch 18, **dadurch gekennzeichnet, daß** die Reibungskupplungseinrichtung als Einfach-Kupplungseinrichtung (24') ausgebildet ist, die eine einer Getriebeeingangswelle des Getriebes (18) zugeordnete Kupplungsanordnung aufweist.

20. Kraftfahrzeug nach Anspruch 18, **dadurch gekennzeichnet, daß** die Reibungskupplungseinrichtung als Doppel- oder Mehrfach-Kupplungseinrichtung (24) ausgebildet ist, die wenigstens zwei jeweils einer eigenen Getriebeeingangswelle (20 bzw. 22) des Getriebes (18) zugeordnete, unabhängig voneinander betätigbare Kupplungsanordnungen aufweist.

21. Kraftfahrzeug nach wenigstens einem der Ansprüche 1 bis 20, **dadurch gekennzeichnet, daß** die Momentenübertragungseinrichtung eine vorzugsweise nasslaufende Anfahrkupplungseinrichtung aufweist.

22. Kraftfahrzeug nach wenigstens einem der Ansprüche 1 bis 21, **dadurch gekennzeichnet, daß** das Kriechmoment auf der Einstellung eines von der Antriebseinheit (12) bereitgestellten Antriebsmoments oder/und wenigstens eines von der Momentenübertragungseinrichtung (24; 60; 24') zum Getriebe (18) übertragenen Übertragungsmoments basiert.

23. Kraftfahrzeug nach Anspruch 22, **dadurch gekennzeichnet, daß** das Übertragungsmoment das in der Kriechbetriebsart von der Momentenübertragungeinrichtung übertragbare Moment ist.

24. Kraftfahrzeug nach wenigstens einem der Ansprüche 1 bis 23, **dadurch gekennzeichnet, daß** das Kriechmoment auf der Einstellung eines Bremsmoments der Bremseinrichtung (62, 66) des Kraftfahrzeugs basiert.

25. Kraftfahrzeug nach wenigstens einem der Ansprüche 1 bis 24, **gekennzeichnet durch** eine elektronische Steuereinheit (36), unter deren Vermittlung auf Grundlage einer entsprechenden Ansteuerung des Antriebsstrangs oder/und der Antriebseinheit (12) oder/und der Momentenübertragungseinrichtung (24; 24') oder/und des Getriebes (18) oder/und der Bremseinrichtung (62, 66) des Kraftfahrzeugs die Kriechbetriebsart aktivierbar und deaktivierbar oder/und das Kriechmoment einstellbar ist.

26. Verfahren zum Betrieb eines Kraftfahrzeugs nach wenigstens einem der vorhergehenden Ansprüche,
- bei dem der Antriebsstrang oder/und die Antriebseinheit (12) oder/und die Momentenübertragungseinrichtung (24; 24') oder/und das Getriebe (18) oder/und die Bremseinrichtung (62, 66) des Kraftfahrzeugs zur Aktivierung bzw. Deaktivierung der Kriechbetriebsart oder/und zur Einstellung eines Kriechmoments angesteuert wird,
**dadurch gekennzeichnet, daß**
- eine manuelle Betätigung des Fahrpedals (38) erfaßt wird und die Aktivierung der Kriechbetriebsart auf Grundlage der erfaßten manuellen Betätigung des Fahrpedals (38) erfolgt,
- *und die Kriechbetriebsart durch eine definiert manuelle Betätigung der Bremseinrichtung* (46; 62, 66) *des Kraftfahrzeugs deaktiviert wird, wobei nach Deaktivierung der Kriechfunktionalität das Kraftfahrzeug auch bei nicht betätigter Bremseinrichtung nicht ankriecht.*

## Claims

1. Motor vehicle having a drive train which has a drive unit (12), a gearbox (18) and a moment transmission device (24; 60; 24') between the drive unit and the gearbox, which motor vehicle can be operated in at least one creep operating mode,
- the gearbox being an automatic gearbox (18) or a change-speed gearbox (18) which can be shifted in an automated manner,
- and, in the **creep operating mode,** it being possible to transmit a creep moment or a creep moment being transmitted to running wheels (64) of the motor vehicle which are driven or can be driven, which creep moment is predefined or can be set or results from operating parameters of the drive-train components and/or other motor-vehicle components,
**characterized**
- **in that** the creep operating mode can be activated by a defined manual actuation of an accelerator pedal (38) of the motor vehicle, which accelerator pedal (38) is to be actuated by the driver, whereupon the vehicle starts to creep or continues to creep when the accelerator pedal is released,
- and **in that** the creep operating mode can be deactivated by a defined manual actuation of the brake device (46; 62, 66) of the motor vehicle, the motor vehicle also not starting to crawl when the brake device is not actuated after deactivation of the creep function.

2. Motor vehicle according to Claim 1, **characterized in that** at least one vehicle basic setting is provided or can be set, according to which the activated state of the creep operating mode is predefined for at least one vehicle situation or according to which the non-activated state of the creep operating mode is predefined for at least one vehicle situation.

3. Motor vehicle according to Claim 2, **characterized in that,** in relation to at least one relevant vehicle operating state or at least one relevant vehicle operating-state range, the activated state or the non-activated state of the creep operating mode determines the vehicle basic setting for the relevant vehicle operating state or vehicle operating-state range if it reoccurs, at the instant of the transition into another vehicle operating state or vehicle operating-state range.

4. Motor vehicle according to either of Claims 2 and 3, **characterized in that** the vehicle basic setting is active necessarily after the occurrence of at least one predefined vehicle state or after the occurrence of one of a plurality of vehicle states and/or after a defined change of the vehicle state.

5. Motor vehicle according to Claim 4, **characterized in that** the vehicle basic setting is active necessarily after a vehicle start and/or after a transition between driving and stopping or driving and coasting.

6. Motor vehicle according to at least one of Claims 1 to 5, **characterized in that** the creep operating mode can be activated by the defined manual actuation of the accelerator pedal, to be precise as a function of at least one further operating parameter of the motor vehicle, preferably a current speed (v_Fzg) of the motor vehicle.

7. Motor vehicle according to at least one of Claims 1 to 6, **characterized in that** the creep operating mode can be activated only when the motor vehicle is stationary or in the case of a current speed (v_Fzg) of the motor vehicle which lies below a threshold value.

8. Motor vehicle according to at least one of Claims 1 to 7, **characterized in that** a checking function is provided which compares the actuation of the accelerator pedal (38) with at least one predefined actuating sample and releases the activation of the creep operating mode only when the actuation of the accelerator pedal coincides with at least one positive actuating sample according to at least one predefined coinciding criterion and/or the actuation of the accelerator pedal does not coincide with any negative actuating sample according to at least one predefined coinciding criterion.

9. Motor vehicle according to at least one of Claims 1 to 8, **characterized in that** the creep moment which occurs in the creep operating mode can be set via the accelerator pedal (38).

10. Motor vehicle according to at least one of Claims 1 to 9, **characterized in that** the creep operating mode can be deactivated at least instantaneously by the defined manual actuation of the brake device (46; 62, 66) of the motor vehicle, to be precise as a function of at least one further operating parameter of the motor vehicle, preferably a current speed (v_Fzg) of the motor vehicle.

11. Motor vehicle according to one of Claims 1, 9 or 10, **characterized in that** the creep operating mode can be deactivated by the defined manual actuation of the brake device permanently, namely until a further activation of the creep operating mode by the defined manual actuation of the driving control element (38) and/or according to an activation of a vehicle basic setting which stipulates the activated state of the creep operating mode.

12. Motor vehicle according to at least one of Claims 1, 10 or 11, **characterized in that** the creep moment which occurs in the creep operating mode can be set via the manual actuation of the brake device (46; 62, 66) of the motor vehicle in the sense of a reduction in such a way that the creep actuating mode continues to remain activated during the manual actuation, and preferably in such a way that the creep moment which is set at the end of the manual actuation is retained after ending of the manual actuation.

13. Motor vehicle according to at least one of Claims 1 to 12, **characterized in that** a checking function is provided which compares the actuation of the brake device (46; 62, 66) with at least one predefined actuating sample and releases the deactivation of the creep operating mode or the reduction in the creep moment only when the actuation of the brake device coincides with at least one positive actuating sample according to at least one predefined coinciding criterion and/or the actuation of the brake device does not coincide with any negative actuating sample according to at least one predefined coinciding criterion.

14. Motor vehicle according to at least one of Claims 1 to 13, **characterized in that** the brake device is a service brake device (46; 62, 66) of the motor vehicle.

15. Motor vehicle according to at least one of Claims 1 to 13, **characterized in that** the brake device is a parking brake device of the motor vehicle.

16. Motor vehicle according to Claim 15, **characterized in that** the brake device can be actuated manually by means of an actuating device which has a pedal or a hand lever or a switch.

17. Motor vehicle according to at least one of Claims 1 to 16, **characterized in that** the moment transmission device comprises a torque converter device (60).

18. Motor vehicle according to at least one of Claims 1 to 16, **characterized in that** the moment transmission device comprises a friction clutch device (24; 24') which can be actuated in an automated manner.

19. Motor vehicle according to Claim 18, **characterized in that** the friction clutch device is configured as a single clutch device (24') which has a clutch arrangement which is assigned to a gearbox input shaft of the gearbox (18).

20. Motor vehicle according to Claim 18, **characterized in that** the friction clutch device is configured as a dual or multiple clutch device (24) which has at least two clutch arrangements which are assigned in each case to a dedicated gearbox input shaft (20 and 22, respectively) of the gearbox (18) and can be actuated independently of one another.

21. Motor vehicle according to at least one of Claims 1 to 20, **characterized in that** the moment transmission device has a preferably wet-running start-up clutch device.

22. Motor vehicle according to at least one of Claims 1 to 21, **characterized in that** the creep moment is based on the setting of a drive moment which is provided by the drive unit (12) and/or of at least one transmission moment which is transmitted by the moment transmission device (24; 60; 24') to the gearbox (18).

23. Motor vehicle according to Claim 22, **characterized in that** the transmission moment is the moment which can be transmitted by the moment transmission device in the creep operating mode.

24. Motor vehicle according to at least one of Claims 1 to 23, **characterized in that** the creep moment is based on the setting of a braking moment of the brake device (62, 66) of the motor vehicle.

25. Motor vehicle according to at least one of Claims 1 to 24, **characterized by** an electronic control unit (36), via which the creep operating mode can be activated and deactivated and/or the creep moment can be set on the basis of a corresponding actuation of the drive train and/or the drive unit (12) and/or the moment transmission device (24; 24') and/or the gearbox (18) and/or the brake device (62, 66) of the motor vehicle.

26. Method for operating a motor vehicle according to at least one of the preceding claims,
- in which the drive train and/or the drive unit (12) and/or the moment transmission device (24; 24') and/or the gearbox (18) and/or the brake device (62, 66) of the motor vehicle are/is actuated for activating or deactivating the creep operating mode and/or for setting a creep moment,
**characterized**
- **in that** a manual actuation of the accelerator pedal (38) is detected and the creep operating mode is activated on the basis of the detected manual actuation of the accelerator pedal (38),
- and **in that** the creep operating mode is deactivated by a defined manual actuation of the brake device (46; 62, 66) of the motor vehicle, the motor vehicle also not starting to crawl when the brake device is not actuated after deactivation of the creep function.

## Revendications

1. Véhicule automobile comprenant une unité d'entraînement (12), une boîte de vitesses (18) et un dispositif de transfert de couple (24 ; 60 ; 24') entre l'unité d'entraînement et la transmission présentant la boîte de vitesses, qui peut être actionnée dans au moins un mode de fonctionnement à vitesse lente,
- la boîte de vitesses étant une boîte de vitesses automatique (18) ou une boîte de vitesses à changement de vitesses automatisée (18),
- et dans le mode de fonctionnement à vitesse lente, un couple de vitesse lente prédéfini ou ajustable ou résultant de paramètres de fonctionnement des composants de la transmission et/ou d'autres composants du véhicule automobile pouvant être transmis ou étant transmis à des roues (64) du véhicule automobile entraînées ou pouvant être entraînées,
**caractérisé en ce que**
- le mode de fonctionnement à vitesse lente peut être activé par un actionnement manuel défini d'une pédale d'accélérateur (38) du véhicule automobile pouvant être actionnée par le conducteur, dont le relâchement amorce ou poursuit le déplacement du véhicule à vitesse lente,
- et **en ce que** le mode de fonctionnement à vitesse lente peut être désactivé par un actionnement manuel défini du dispositif de frein (46 ; 62, 66) du véhicule automobile, le véhicule automobile ne passant pas à la vitesse lente après la désactivation de la fonction de vitesse lente du véhicule automobile, même si le dispositif de frein n'est pas actionné.

2. Véhicule automobile selon la revendication 1, **caractérisé en ce qu'**au moins un ajustement de base du véhicule est prévu ou peut être ajusté, après lequel, pour au moins une situation du véhicule, l'état d'activation du mode de fonctionnement à vitesse lente est prédéfini ou après lequel, pour au moins une situation du véhicule, l'état de non activation du mode de fonctionnement à vitesse lente est prédéfini.

3. Véhicule automobile selon la revendication 2, **caractérisé en ce que** par rapport à au moins un état de fonctionnement approprié du véhicule, ou au moins une plage d'état de fonctionnement du véhicule, l'état d'activation ou l'état de non activation du mode de fonctionnement à vitesse lente à l'instant du passage dans un autre état de fonctionnement du véhicule ou dans une autre plage d'état de fonctionnement du véhicule, définit l'ajustement de base du véhicule pour l'état de fonctionnement approprié du véhicule ou pour la plage d'état de fonctionnement du véhicule dans le cas de sa réapparition.

4. Véhicule automobile selon l'une quelconque des revendications 2 ou 3, **caractérisé en ce que** l'ajustement de base du véhicule est activé obligatoirement après l'apparition d'au moins un état du véhicule prédéfini ou après l'apparition d'un parmi plusieurs états du véhicule et/ou après une modification définie de l'état du véhicule.

5. Véhicule automobile selon la revendication 4, **caractérisé en ce que** l'ajustement de base du véhicule est activé obligatoirement après un démarrage du véhicule et/ou après un passage de la conduite à l'arrêt ou de la conduite au ralentissement jusqu'à l'arrêt.

6. Véhicule automobile selon au moins l'une quelconque des revendications 1 à 5, **caractérisé en ce que** le mode de fonctionnement à vitesse lente peut être activé par l'actionnement manuel défini de la pédale de conduite, et ce en fonction d'au moins un autre paramètre de fonctionnement du véhicule automobile, de préférence une vitesse instantanée (v_Fzg) du véhicule automobile.

7. Véhicule automobile selon au moins l'une quelconque des revendications 1 à 6, **caractérisé en ce que** le mode de fonctionnement à vitesse lente ne peut être activé qu'à l'arrêt du véhicule ou à une vitesse instantanée (v_Fzg) du véhicule automobile située en dessous d'une valeur de seuil.

8. Véhicule automobile selon au moins l'une quelconque des revendications 1 à 7, **caractérisé en ce qu'**il est prévu une fonctionnalité de contrôle, qui compare l'actionnement de la pédale d'accélérateur (38) à au moins un modèle d'actionnement prédéfini et qui n'autorise l'activation du mode de fonctionnement à vitesse lente que lorsque l'actionnement de la pédale d'accélérateur suivant au moins un critère de coïncidence prédéfini coïncide avec au moins un modèle d'actionnement positif, et/ou lorsque l'actionnement de la pédale d'accélérateur suivant au moins un critère de coïncidence prédéfini ne coïncide avec aucun motif d'actionnement négatif.

9. Véhicule automobile selon au moins l'une quelconque des revendications 1 à 8, **caractérisé en ce que** le couple de vitesse lente se produisant en mode de fonctionnement à vitesse lente peut être ajusté par l'intermédiaire de la pédale d'accélérateur (38).

10. Véhicule automobile selon au moins l'une quelconque des revendications 1 à 9, **caractérisé en ce que** le mode de fonctionnement à vitesse lente peut être désactivé au moins temporairement par l'actionnement manuel défini du dispositif de freinage (46 ; 62, 66) du véhicule automobile, et ce en fonction d'au moins un autre paramètre de fonctionnement du véhicule automobile, de préférence une vitesse instantanée (v_Fzg) du véhicule automobile.

11. Véhicule automobile selon l'une quelconque des revendications 1, 9 ou 10, **caractérisé en ce que** le mode de fonctionnement à vitesse lente peut être désactivé par l'actionnement manuel défini du dispositif de frein, de manière durable, à savoir jusqu'à une nouvelle activation du mode de fonctionnement à vitesse lente, par l'actionnement manuel défini de l'organe de commande du véhicule (38) et/ou selon une activation d'un ajustement de base du véhicule prédéfinissant l'état d'activation du mode de fonctionnement à vitesse lente.

12. Véhicule automobile selon au moins l'une quelconque des revendications 1, 10 ou 11, **caractérisé en ce que** le couple de vitesse lente produit dans le mode de fonctionnement à vitesse lente peut être ajusté dans le sens d'une réduction par l'intermédiaire de l'actionnement manuel du dispositif de frein (46 ; 62, 66) du véhicule automobile, de telle sorte que le mode de fonctionnement à vitesse lente reste encore activé pendant l'actionnement manuel, et de préférence de telle sorte que le couple de vitesse lente ajusté vers la fin de l'actionnement manuel reste maintenu après la fin de l'actionnement manuel.

13. Véhicule automobile selon au moins l'une quelconque des revendications 1 à 12, **caractérisé en ce qu'**il est prévu une fonctionnalité de contrôle, qui compare l'actionnement du dispositif de frein (46 ; 62, 66) à au moins un modèle d'actionnement prédéfini et qui n'autorise l'activation du mode de fonctionnement à vitesse lente ou la réduction du couple de vitesse lente que lorsque l'actionnement du dispositif de frein suivant au moins un critère de coïncidence prédéfini coïncide avec au moins un modèle d'actionnement positif, et/ou lorsque l'actionnement du dispositif de frein suivant au moins un critère de coïncidence prédéfini ne coïncide avec aucun motif d'actionnement négatif.

14. Véhicule automobile selon au moins l'une quelconque des revendications 1 à 13, **caractérisé en ce que** le dispositif de frein est un dispositif de frein de service (46 ; 62, 66) du véhicule automobile.

15. Véhicule automobile selon au moins l'une quelconque des revendications 1 à 13, **caractérisé en ce que** le dispositif de frein est un dispositif de frein de stationnement du véhicule automobile.

16. Véhicule automobile selon la revendication 15, **caractérisé en ce que** le dispositif de frein peut être actionné manuellement au moyen d'un dispositif d'actionnement présentant une pédale ou un levier manuel ou un commutateur.

17. Véhicule automobile selon au moins l'une quelconque des revendications 1 à 16, **caractérisé en ce que** le dispositif de transfert de couple comprend un dispositif convertisseur de couple (60).

18. Véhicule automobile selon au moins l'une quelconque des revendications 1 à 16, **caractérisé en ce que** le dispositif de transfert de couple comprend un dispositif d'embrayage à friction (24 ; 24') actionnable de manière automatisée.

19. Véhicule automobile selon la revendication 18, **caractérisé en ce que** le dispositif d'embrayage à friction est réalisé sous la forme d'un dispositif d'embrayage simple (24'), qui présente un agencement d'embrayage associé à un arbre d'entrée de boîte de vitesses de la boîte de vitesses (18).

20. Véhicule automobile selon la revendication 18, **caractérisé en ce que** le dispositif d'embrayage à friction est réalisé sous la forme d'un dispositif d'embrayage double ou multiple (24), qui présente au moins deux agencements d'embrayage actionnables indépendamment l'un de l'autre et associés à chaque fois à un arbre d'entrée de boîte de vitesses (20, respectivement 22) de la boîte de vitesses (18).

21. Véhicule automobile selon au moins l'une quelconque des revendications 1 à 20, **caractérisé en ce que** le dispositif de transfert de couple présente un dispositif d'embrayage de démarrage de préférence humide.

22. Véhicule automobile selon au moins l'une quelconque des revendications 1 à 21, **caractérisé en ce que** le couple de vitesse lente se base sur l'ajustement d'un couple d'entraînement fourni par l'unité d'entraînement (12) et/ou au moins d'un couple de transfert transmis par le dispositif de transfert de couple (24 ; 60 ; 24') à la boîte de vitesses (18).

23. Véhicule automobile selon la revendication 22, **caractérisé en ce que** le couple de transfert est le couple pouvant être transmis dans le mode de fonctionnement à vitesse lente par le dispositif de transfert de couple.

24. Véhicule automobile selon au moins l'une quelconque des revendications 1 à 23, **caractérisé en ce que** le couple de vitesse lente se base sur l'ajustement d'un couple de freinage du dispositif de frein (62, 66) du véhicule automobile.

25. Véhicule automobile selon au moins l'une quelconque des revendications 1 à 24, **caractérisé par** une unité de commande électronique (36), par l'intermédiaire de laquelle, sur la base d'une commande correspondante de la transmission et/ou de l'unité d'entraînement (12) et/ou du dispositif de transfert de couple (24 ; 24') et/ou de la boîte de vitesses (18) et/ou du dispositif de frein (62, 66) du véhicule automobile, le mode de fonctionnement à vitesse lente peut être activé et désactivé et/ou le couple de vitesse lente peut être ajusté.

26. Procédé pour faire fonctionner un véhicule automobile selon au moins l'une quelconque des revendications précédentes,
- dans lequel la transmission et/ou l'unité d'entraînement (12) et/ou le dispositif de transfert de couple (24 ; 24') et/ou la boîte de vitesses (18) et/ou le dispositif de frein (62, 66) du véhicule automobile est ou sont commandés pour l'activation ou la désactivation du mode de fonctionnement à vitesse lente et/ou pour l'ajustement du couple de vitesse lente,
**caractérisé en ce qu'**
- un actionnement manuel de la pédale d'accélérateur (38) est détecté et l'activation du mode de fonctionnement à vitesse lente s'effectue sur la base de l'actionnement manuel détecté de la pédale d'accélérateur (38),
- et **en ce que** le mode de fonctionnement à vitesse lente est désactivé par un actionnement manuel défini du dispositif de frein (46 ; 62, 66) du véhicule automobile, et le véhicule automobile ne passant pas à la vitesse lente après la désactivation de la fonctionnalité de vitesse lente du véhicule automobile, même si le dispositif de frein n'est pas actionné.
